# EUROPÄISCHE PATENTSCHRIFT

(11) **EP 1 636 894 B1**
(45) Veröffentlichungstag und Bekanntmachung des Hinweises auf die Patenterteilung: **30.08.2006**
(21) Anmeldenummer: 04727531.8
(22) Anmeldetag: 15.04.2004
(51) Int. Cl.: H02K 55/04, F25B 49/02, F28D 15/02, F28D 15/04

(54) **SUPRALEITENDE MASCHINENEINRICHTUNG MIT EINER SUPRALEITENDEN WICKLUNG UND EINER THERMOSYPHON-KÜHLUNG**
SUPERCONDUCTING MOTOR DEVICE WITH A SUPERCONDUCTING WINDING AND COOLING BY THERMAL SIPHON
SYSTEME A MOTEUR SUPRACONDUCTEUR PRESENTANT UN BOBINAGE SUPRACONDUCTEUR ET UN REFROIDISSEMENT PAR THERMOSIPHON

(30) Priorität: 13.05.2003 DE 10321463
(43) Veröffentlichungstag der Anmeldung: 22.03.2006
(73) Patentinhaber: SIEMENS AKTIENGESELLSCHAFT, 80333 München (DE)
(72) Erfinder: FRANK, Michael, 91080 Uttenreuth (DE); KÜHN, Adolf, 90552 Röthenbach (DE); VAN HASSELT, Peter, 91058 Erlangen (DE)
(86) Internationale Anmeldenummer: PCT/EP2004/003987
(87) Internationale Veröffentlichungsnummer: WO 2004/102779

(56) Entgegenhaltungen:
- DE-A- 10 039 964
- DE-A- 10 057 664

## Beschreibung

Die Erfindung bezieht sich auf eine supraleitende Maschineneinrichtung
- mit einem um eine Rotationsachse drehbar gelagerten Rotor, der mindestens eine supraleitende Wicklung aufweist, deren Leiter wärmeleitend an einen zentralen, sich in Achsrichtung erstreckenden zylindrischen Hohlraum angekoppelt sind,
- mit einer außerhalb des Rotors befindlichen, ortsfesten Kälteeinheit mit einem Kondensorraum
und
- mit zwischen dem zentralen Hohlraum des Rotors und dem Kondensorraum der Kälteeinheit verlaufenden, rohrförmigen Leitungsteilen.
Dabei bilden der Hohlraum, die rohrförmigen Leitungsteile und der Kondensorraum ein geschlossenes Ein-Rohr-Leitungssystem, in dem sich ein Kältemittel befindet, wobei unter Ausnutzung eines Thermosyphon-Effektes in dem Kondensorraum kondensiertes Kältemittel über die rohrförmigen Leitungsteile in den zentralen Hohlraum sowie dort verdampfendes Kältemittel zurück über die Leitungsteile zu dem Kondensorraum gelangt. Eine entsprechende Maschineneinrichtung geht aus der DE 100 57 664 A1 hervor.

Seit 1987 kennt man metalloxidische Supraleitermaterialien mit Sprungtemperaturen T_{c} von über 77 K. Diese Materialien werden auch als Hoch(High)-T_{c}-Supraleitermaterialien oder HTS-Materialien bezeichnet und ermöglichen prinzipiell eine Kühltechnik mit flüssigem Stickstoff (LN₂).

Mit Leitern unter Verwendung solcher HTS-Materialien versucht man, auch supraleitende Wicklung von Maschinen zu erstellen. Es zeigt sich jedoch, dass bisher bekannte Leiter eine verhältnismäßig geringe Stromtragfähigkeit in Magnetfeldern mit Induktionen im Tesla-Bereich besitzen. Dies macht es vielfach erforderlich, dass die Leiter solcher Wicklungen trotz der an sich hohen Sprungtemperaturen T_{c} der verwendeten Materialien dennoch auf einem unterhalb von 77 K liegenden Temperaturniveau beispielsweise zwischen 10 und 50 K gehalten werden müssen, um so bei den hohen Feldstärken nennenswerte Ströme tragen zu können. Ein solches Temperaturniveau liegt deutlich höher als 4,2 K, der Siedetemperatur des flüssigen Heliums (LHe), mit dem bekannte metallische Supraleitermaterialien mit vergleichsweise niedriger Sprungtemperatur T_{c}, sogenannte Niedrig(Low)-T_{c}-Supraleitermaterialien oder LTS-Materialien, gekühlt werden.

Zur Kühlung von Wicklungen mit HTS-Leitern in dem genannten Temperaturbereich unter 77 K kommen bevorzugt Kälteanlagen in Form von sogenannten Kryokühlern mit geschlossenem He-Druckgaskreislauf zum Einsatz. Solche Kryokühler sind insbesondere vom Typ Gifford-McMahon oder Stirling oder sind als sogenannte Pulsröhrenkühler ausgebildet. Sie haben zudem den Vorteil, dass ihre Kälteleistung quasi auf Knopfdruck zur Verfügung steht und die Handhabung von tiefkalten Flüssigkeiten vermieden wird. Bei Verwendung solcher Kälteanlagen wird die supraleitende Wicklung lediglich durch Wärmeleitung zu einem Kaltkopf eines Refrigerators indirekt gekühlt (vgl. z.B. "Proc. 16^{th} Int. Cryog. Engng. Conf. (ICEC 16)", Kitakyushu, JP, 20.-24.05.1996, Verlag Elsevier Science, 1997, Seiten 1109 bis 1129).

Eine entsprechende Kühltechnik ist auch für den aus der eingangs genannten DE 100 57 664 A1 entnehmbaren Rotor einer elektrischen Maschine vorgesehen. Der Rotor enthält eine rotierende Wicklung aus HTS-Leitern, die sich in einem wärmeleitend ausgebildeten Wicklungsträger befinden. Dieser Wicklungsträger ist mit einem zentralen, sich in Achsrichtung erstreckenden, zylindrischen Hohlraum ausgestattet, an den sich seitlich aus dem Wicklungsträger herausführende rohrförmige Leitungsteile anschließen. Diese Leitungsteile führen in einen geodätisch höher liegenden Kondensorraum einer Kälteeinheit und bilden zusammen mit diesem Kondensorraum und dem zentralen Rotorhohlraum ein geschlossenes Ein-Rohr-Leitungssystem. In diesem Leitungssystem befindet sich ein Kältemittel, das unter Ausnutzung eines sogenannten Thermosyphon-Effektes zirkuliert. Hierbei wird in dem Kondensorraum kondensiertes Kältemittel über die rohrförmigen Leitungsteile in den zentralen Hohlraum geleitet, wo es wegen der thermischen Ankopplung an den Wicklungsträger und damit an die HTS-Wicklung Wärme aufnimmt und verdampft. Das verdampfte Kältemittel gelangt dann zurück über dieselben Leitungsteile in den Kondensorraum, wo es zurückkondensiert wird. Die hierfür erforderliche Kälteleistung wird von einer Kältemaschine erbracht, deren Kaltkopf an den Kondensorraum thermisch angekoppelt ist.

Der Rückstrom des Kältemittels wird dabei getrieben durch einen leichten Überdruck in den als Verdampferteil wirkenden zentralen Hohlraum hin zu dem als Kondensator wirkenden Teilen der Kältemaschine. Dieser durch das Entstehen von Gas im Verdampferteil und das Verflüssigen im Kondensorraum erzeugte Überdruck führt also zu dem gewünschten Kältemittelrückstrom. Entsprechende Kältemittelströmungen sind von sogenannten "Heat-Pipes" prinzipiell her bekannt.

Bei der bekannten Maschine mit Thermosyphon-Kühlung mittels einer entsprechenden Kälteeinheit erfolgt also der Transport des Kältemittels allein unter Ausnutzung der Schwerkraft, so dass keine weiteren Pumpsysteme erforderlich sind. Will man eine derartige Maschineneinrichtung auf Schiffen oder Off-shore-Einrichtungen einsetzen, so muss vielfach mit statischen Schieflagen, einem sogenannten "Trim", von bis zu ±5° und/oder mit dynamischen Schieflagen von bis zu ±7,5° in Längsrichtung gerechnet werden. Um eine Zulassung einer Klassifizierungsgesellschaft für einen Schiffseinsatz zu erhalten, muss folglich das Kühlsystem einer solchen Maschineneinrichtung an Bord eines Seefahrzeugs auch unter diesen Bedingungen eine sichere Kühlung gewährleisten. Will man die genannten Schieflagen der Maschine zulassen, so besteht dann die Gefahr, dass ein Bereich der rohrförmigen Leitungsteile zwischen dem zentralen Rotorhohlraum und der Kälteeinheit geodätisch tiefer zu liegen kommt als der zentrale Rotorhohlraum. Die Folge davon ist, dass das Kältemittel unter Einfluss der Schwerkraft den zu kühlenden Rotorhohlraum nicht erreichen kann. Eine Kühlung der Maschine und somit deren Betrieb wäre damit nicht mehr sichergestellt.

Um dieser Gefahr zu begegnen, sind mehrere Vorschläge bekannt:
- Die einfachste Lösung besteht darin, die Maschine gegenüber der Horizontalen so geneigt anzuordnen, dass auch bei größter anzunehmender Trimlage oder Oszillationsamplitude in dem Thermosyphon-Leitungssystem immer noch ein Gefälle in Richtung auf den Rotorhohlraum vorhanden ist. Eine entsprechend geneigte Anordnung ist gerade im Schiffsbau insbesondere bei größerer Maschinenlänge aus Gründen eines dann erforderlichen großen Platzbedarfs unerwünscht.
- Statt eines Ein-Rohr-Leitungssystems, bei dem das flüssige und das gasförmige Kältemittel durch gleiche Rohrteile strömen, sind auch Zwei-Rohr-Leitungssysteme für eine Kältemittelzirkulation unter Ausnutzung eines Thermosyphon-Effektes bekannt (vgl. z.B. WO 00/13296 A). Hierbei muss jedoch im Bereich der Hohlwelle des Rotors ein zusätzliches Rohr für das gasförmige Kältemittel vorgesehen werden.
- Prinzipiell kann das Kältemittel auch durch eine Pumpanlage zwangsumgewälzt werden. Hierfür ist jedoch ein erheblicher apparativer Aufwand erforderlich, insbesondere wenn sich das Kältemittel z.B. auf einer Temperatur von 25 bis 30 K befinden soll. Derartige Umwälzanlagen bedingen zudem erhebliche Verluste und können die Lebensdaueranforderungen des Schiffsbaus mit seinen langen Wartungsintervallen kaum erfüllen.

Aufgabe der vorliegenden Erfindung ist es deshalb, die eine Maschine und zugehörende Kälteeinheit umfassende Maschineneinrichtung mit den eingangs genannten Merkmalen dahingehend auszugestalten, dass auch bei Schräglagen ihres Rotors, wie sie bei einem Einsatz auf Schiffen oder Off-Shore-Einrichtung auftreten können, das Kältemittel dennoch den zentralen Rotorhohlraum erreicht.

Diese Aufgabe wird erfindungsgemäß mit den in Anspruch 1 angegebenen Maßnahmen gelöst. Dementsprechend sollen bei der Maschineneinheit mit den eingangs genannten Merkmalen Mittel zur Druckerhöhung vorgesehen sein, die eine kurzzeitige Pumpwirkung auf das flüssige Kältemittel in Richtung auf den zentralen Rotorhohlraum hin mittels Druckpulsen an gasförmigem Kältemittel hervorrufen.

Bei der Erfindung wird von der Überlegung ausgegangen, dass eine Förderung des Kältemittels in den zentralen Hohlraum nicht unbedingt kontinuierlich erfolgen muss. Auf Grund der thermischen Trägheit des Systems genügt es nämlich, wenn eine Nachfüllung des Kältemittels in den Rotorhohlraum in zeitlichen Abständen für eine hinreichend kurze Zeitdauer (= "kurzzeitig") erfolgt. Die mit der erfindungsgemäßen Ausgestaltung der Maschineneinrichtung verbundenen Vorteile sind also darin zu sehen, dass mit Hilfe der nur kurzzeitig wirkenden und beliebig oft wiederholbaren Druckpulse auf das flüssige Kältemittel auch bei Schieflagen des Rotors der Maschine eine für eine sichere Kühlung der supraleitenden Wicklung hinreichende Befüllung des zentralen Hohlraums mit flüssigem Kältemittel zu gewährleisten ist. Dabei wird wegen der nur kurzzeitigen Einwirkung (im Allgemeinen im Sekundenbereich) eine Verdampfung größerer Mengen an flüssigem Kältemittel und damit eine spürbare Herabsetzung der Kälteleistung an der Wicklung vermieden.

Vorteilhafte Weiterbildungen der aus Anspruch 1 entnehmbaren Maschineneinrichtung sind den abhängigen Ansprüchen zu entnehmen.

So können die Druckerhöhungsmittel vorzugsweise auf den Bereich des Kondensorraums oder der rohrförmigen Leitungsteile einwirken. Eine sichere Förderung des flüssigen Kältemittels in den zentralen Hohlraum des Rotors ist so auch bei realistischen Schieflagen zu gewährleisten.

Eine bevorzugte Maßnahme für das kurzzeitige Pumpen während einer entsprechenden Zeitdauer ist in einem mit gasförmigem, unter Überdruck stehendem Kältemittel gefüllten Puffervolumen zu sehen, das mit dem Kondensorraum oder den sich daran anschließenden Leitungsteilen über eine das gasförmige Kältemittel fördernde Pumpe zu verbinden ist.

Stattdessen kann an den rohrförmigen Leitungsteilen eine auf das flüssige Kältemittel einwirkende Heizvorrichtung angebracht sein, die für das kurzzeitige Pumpen während einer entsprechenden Zeitdauer zu aktivieren ist. Dabei kann die Heizvorrichtung vorteilhaft in einem zumindest teilweise mit flüssigem Kältemittel gefüllten Puffervolumen angeordnet sein. Entsprechende Druckerhöhungsmittel sind verhältnismäßig einfach zu realisieren.

Zur Förderung des flüssigen Kältemittels in den zentralen Hohlraum des Rotors kann vorteilhaft eine permanent pulsierende Druckerhöhung vorgesehen werden. Eine entsprechend Förderung bedarf nur eines geringen apparativen Aufwands.

Stattdessen oder zusätzlich kann eine sensorisch ausgelöste Druckerhöhung vorgesehen werden. Hierzu lässt sich ein die Druckerhöhung auslösender, die Neigung der Rotationsachse gegenüber der Horizontalen detektierender Lagesensor oder ein die Druckerhöhung auslösender Füllstandssensor an den rohrförmigen Leitungsteilen verwenden.

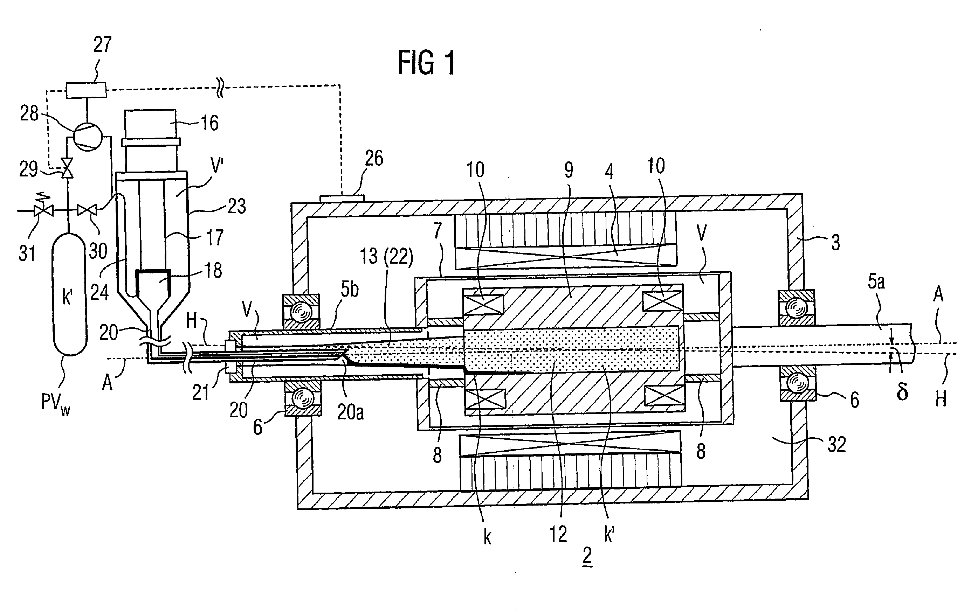

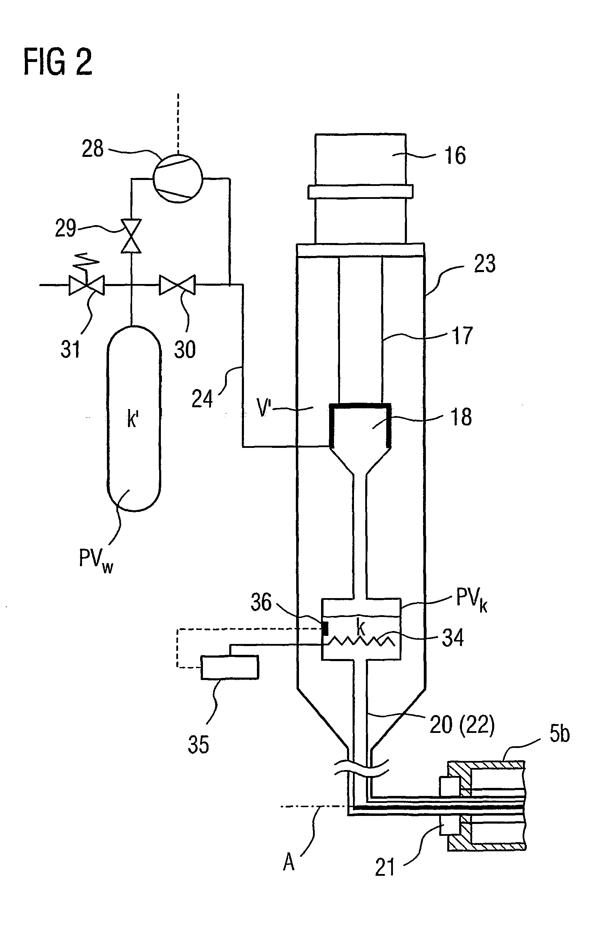

Zur weiteren Erläuterung der Erfindung wird nachfolgend auf die Zeichnung Bezug genommen, an Hand derer zwei bevorzugte Ausführungsbeispiele einer Maschineneinrichtung noch weiter beschrieben werden. Dabei zeigen jeweils in einem Längsschnitt schematisch
- deren Figur 1: eine erste Ausführungsform einer Maschine dieser Einrichtung mit zugehörender Kälteeinheit
- sowie deren Figur 2: eine weitere Ausgestaltungsmöglichkeit der Kälteeinheit für die Maschine.
In den Figuren sind sich entsprechende Teile mit denselben Bezugszeichen versehen.

Erfindungsgemäße Maschineneinrichtungen umfassen jeweils eine Maschine bzw. einen Motor sowie eine zugeordnete Kälteeinheit. Bei der nachfolgend an Hand der Figuren angedeuteten Ausführungsform ihrer Maschine kann es sich insbesondere um einen Synchron-Motor oder einen Generator handeln. Die Maschine umfasst eine rotierende, supraleitende Wicklung, die prinzipiell eine Verwendung von metallischem LTS-Material (Niedrig-T_{c}-Supraleitermaterial) oder oxidischem HTS-Material (Hoch-T_{c}-Supraleitermaterial) gestattet. Letzteres Material sei für die nachfolgenden Ausführungsbeispiele zu Grunde gelegt. Die Wicklung kann aus einer Spule oder aus einem System von Spulen in einer zwei-, vier- oder sonstigen mehrpoligen Anordnung bestehen. Der prinzipielle Aufbau eines entsprechenden Synchron-Motors geht aus Figur 1 hervor, wobei von der aus der eingangs genannten DE 100 57 664 A1 bekannten Ausführungsform einer solchen Maschine ausgegangen wird.

Die mit 2 bezeichnete Maschine umfasst ein feststehendes, auf Raumtemperatur befindliches Außengehäuse 3 mit einer Ständerwicklung 4. Innerhalb des Außengehäuses und von der Ständerwicklung 4 umschlossen ist ein Rotor 5 drehbar um eine Rotationsachse A in Lagern 6 gelagert. Bei diesen Lagern kann es sich um konventionelle mechanische Lager oder auch um Magnetlager handeln. Der Rotor weist ferner ein Vakuumgefäß 7 auf, in dem an z.B. hohlzylindrischen, drehmomentübertragenden Aufhängeelementen 8 ein Wicklungsträger 9 mit einer HTS-Wicklung 10 gehaltert ist. In diesem Wicklungsträger ist konzentrisch zur Rotationsachse A ein sich in Achsrichtung erstreckender zentraler Hohlraum 12 vorhanden, der beispielsweise eine Zylinderform hat. Der Wicklungsträger ist dabei vakuumdicht gegenüber diesem Hohlraum ausgeführt. Er schließt diesen auf einer Seite des Rotors ab, der auf dieser Seite mittels eines massiven axialen Rotorwellenteils 5a gelagert ist. Auf der gegenüberliegenden Seite ist der zentrale Hohlraum 12 an einen seitlichen Hohlraum 13 mit vergleichsweise kleinerem Durchmesser angeschlossen. Dieser seitliche Hohlraum führt von dem Bereich des Wicklungsträgers nach außen aus dem Bereich des Außengehäuses 3 hinaus. Ein diesen seitlichen Hohlraum 13 umschließender, in einem der Lager gelagerter, rohrförmiger Rotorwellenteil ist mit 5b bezeichnet.

Zu einer indirekten Kühlung der HTS-Wicklung 10 über wärmeleitende Teile ist eine Kälteeinheit vorgesehen, von der lediglich ein Kaltkopf 16 angedeutet ist. Bei dieser Kälteeinheit kann es sich um einen Kryokühler vom Typ Gifford-McMahon oder insbesondere um einen regenerativen Kryokühler wie z.B. einen Pulsröhrenkühler oder einer Split-Stirling-Kühler handeln. Dabei befinden sich der Kaltkopf 16 und damit alle wesentlichen, weiteren Teile der Kälteeinheit außerhalb des Rotors 5 bzw. dessen Außengehäuses 3.

Das Kaltteil des beispielsweise etliche Meter seitlich von dem Rotor 5 angeordneten Kaltkopfes 16 steht in einem Vakuumgefäß 23 über einen Wärmeübertragungskörper 17 in gutem thermischen Kontakt mit einer Kältemittelkondensationseinheit, die einen Kondensorraum 18 aufweist. An diesem Kondensorraum ist ein vakuumisoliertes, ortsfestes Wärmerohr 20 angeschlossen, das seitlich in einem axialen Bereich in den seitlichen, mitrotierenden Hohlraum 13 oder den zentralen Hohlraum 12 hineinragt. Zur Abdichtung des Wärmerohres 20 gegenüber dem seitlichen Hohlraum 13 dient eine in der Figur nicht näher ausgeführte Dichtungseinrichtung 21 mit mindestens einem Dichtungselement, das als eine Ferrofluiddichtung und/oder eine Labyrinthdichtung und/oder eine Spaltdichtung ausgebildet sein kann. Über das Wärmerohr 20 und den seitlichen Hohlraum 13 ist der zentrale Hohlraum 12 mit dem Wärmetauschbereich des Kondensorraums 18 nach außen gasdicht abgedichtet verbunden. Die zwischen dem zentralen Hohlraum 12 und dem Kondensorraum 18 verlaufenden, rohrförmigen Teile, die zur Aufnahme eines Kältemittels dienen, sind allgemein als Leitungsteile 22 bezeichnet. Diese Leitungsteile werden zusammen mit dem Kondensorraum 18 und dem zentralen Hohlraum 12 als ein Leitungssystem betrachtet.

Diese Räume dieses Leitungssystems sind mit einem Kältemittel gefüllt, das je nach gewünschter Betriebstemperatur der HTS-Wicklung 10 ausgewählt wird. So kommen beispielsweise Wasserstoff (Kondensationstemperatur 20,4 K bei Normaldruck), Neon (Kondensationstemperatur 27,1 K bei Normaldruck), Stickstoff (Kondensationstemperatur 77,4 K bei Normaldruck) oder Argon (Kondensationstemperatur 87,3 K bei Normaldruck) in Frage. Auch können Gemische aus diesen Gasen vorgesehen werden. Die Zirkulation des Kältemittels erfolgt dabei unter Ausnutzungen eines sogenannten Thermosyphon-Effektes. Hierzu wird an einer Kaltfläche des Kaltkopfes 16 im Bereich des Kondensorraums 18 das Kältemittel kondensiert. Anschließend fließt das so verflüssigte, mit k bezeichnete Kältemittel durch die Leitungsteile 22 in den zentralen Hohlraum 12. Der Transport des Kondensats geschieht dabei unter Einfluss der Schwerkraft. Hierzu kann vorteilhaft das Wärmerohr 20 geringfügig (um einige wenige Grad) gegenüber der Rotationsachse A geneigt sein, um so ein Herausfließen des flüssigen Kältemittels k aus dem offenen Ende 20a des Rohres 20 zu unterstützen. Im Inneren des Rotors wird dann das flüssige Kältemittel verdampft. Das dampfförmige Kältemittel ist mit k' bezeichnet. Dieses unter Aufnahme von Wärme verdampfte Kältemittel strömt dann durch das Innere der Leitungsteile 22 zurück in den Kondensorraum 18. Hierbei wird der Rückstrom durch einen leichten Überdruck im als Verdampfer wirkenden Hohlraum 12 in Richtung auf den Kondensorraum 18 hin angefacht, der durch das Entstehen von Gas im Verdampfer und das Verflüssigen in dem Kondensorraum verursacht wird. Da die Zirkulation des verflüssigten Kältemittels von dem Kondensorraum 18 in den zentralen Hohlraum 12 und die Rückströmung des verdampften Kältemittels k' aus diesem Hohlraum zurück zu dem Kondensorraum in dem aus dem Kondensorraum 18, den Leitungsteilen 22 und dem Hohlraum 12 gebildeten rohrförmigen Leitungssystem erfolgt, kann von einem Ein-Rohr-System mit einer Zirkulation des Kältemittels k, k' unter Ausnutzung eines Thermosyphon-Effektes gesprochen werden.

Wie aus Figur 1 ferner ersichtlich ist, kann bei einem Einsatz der Maschine 2 auf Schiffen oder Off-shore-Einrichtungen eine Schieflage auftreten, bei der die Rotationsachse A gegenüber der Horizontalen H um einen Winkel δ von einigen Grad geneigt ist. Dann erfolgt zwar nach wie vor eine Kondensation des Kältemittels in dem Kondensorraum 18; aber das Kältemittel kann nicht mehr den zentralen Hohlraum 12 erreichen, so dass dann die Leitungsteile 22 insbesondere im achsnahen Bereich allmählich mit flüssigem Kältemittel k volllaufen. Bei einer verhältnismäßig geringen Füllmenge des Leitungssystems mit Kältemittel kann dann der Läuferinnenraum bzw. der Hohlraum 12 trocken laufen und wird somit nicht mehr gekühlt. Bei einer größeren Füllmenge des Leitungssystems wird der Rückstrom des gasförmigen Kältemittels k' in den Leitungsteilen 22 hin zum Kondensorraum 18 nach einer gewissen Zeit durch angesammeltes flüssiges Kältemittel blockiert. Eine sichere Kühlung des Rotors bzw. seiner supraleitenden Wicklung ist in diesem Fall ebenfalls nicht mehr gewährleistet. Gemäß der Erfindung ist deshalb vorgesehen, dass in diesem Zustand der Gasdruck auf der Kondensorseite für eine kurze Zeit soweit zu erhöhen ist, dass hierdurch die Kältemittelflüssigkeit aus den Leitungsteilen 22 entgegen der Schwerkraft (bei Vorhandensein des Neigungswinkels δ) in den zentralen Hohlraum 12 gedrückt wird.

Eine solche Druckerhöhung kann gemäß der Ausführungsform nach Figur 1 mit Hilfe eines warmen Puffervolumens PV_{w} und einer Pumpe 28 realisiert werden. Mit Hilfe dieser Mittel kann der Gasdruck in dem Kondensorraum 18 vorübergehend erhöht werden, so dass das dort und in den Leitungsteilen 22 befindliche flüssige Kältemittel k in den zentralen Hohlraum 12 gedrückt wird. In einer Verbindungsleitung 24 zwischen dem unter Überdruck stehenden Puffervolumen PV_{w} und dem Kondensorraum 18 ist deshalb ein Steuerventil 29 angeordnet, das die Verbindung zu der Pumpe 28 öffnet, die dann das Gas k' aus dem Puffervolumen in den Kondensorraum fördert. Ein Ventil 30 erlaubt eine Rückführung von überschüssigem Gas aus dem Leitungssystem 20.

Eine so hervorzurufende Druckoszillation kann permanent erfolgen, d.h. in kurzen, sich wiederholenden Zeitintervallen (jeweils für eine kurze Zeitdauer), oder kann durch einen Lagesensor 26 bekannter Bauweise von einer Steuereinheit 27 gesteuert werden. Dieser Lagesensor detektiert die Schieflage mit dem Neigungswinkel δ der Maschine 2 und löst so über die Steuereinheit 27 die erläuterte Einleitung eines Druckvolumens (Gaspulses) aus.

In Figur 1 wurde von einer Darstellung weiterer Teile zur Bereitstellung und Ableitung des Gases wie z.B. von einem Füllventil, von dem aus das System über die Verbindungsleitung 24 mit gasförmigem Kältemittel zu befüllen ist, abgesehen, da diese Teile allgemein bekannt sind. Lediglich ein bei einem unzulässigen Überdruck in dem System ansprechendes Überdruckventil 31 ist angedeutet.

Selbstverständlich müssen die das Kältemittel k bzw. k' umschließenden Teile oder Behältnisse gegen Wärmeeinleitung geschützt sein. Zu ihrer thermischen Isolation wird deshalb zweckmäßig eine Vakuumumgebung vorgesehen, wobei gegebenenfalls in den entsprechenden Vakuumräumen zusätzlich noch Isolationsmittel wie z.B. Superisolation oder Isolationsschaum vorgesehen werden können. In Figur 1 ist das von dem Vakuumgefäß 7 eingeschlossene Vakuum mit V bezeichnet. Es umgibt außerdem das den seitlichen Hohlraum 13 umschließende, sich bis zu der Dichtung 21 erstreckende Rohr. Das das Wärmerohr 20 sowie den Kondensorraum 18 und den Wärmeübertragungskörper 17 umschließende Vakuum ist mit V' bezeichnet. Gegebenenfalls kann auch in dem den Rotor 5 umgebenden, von dem Außengehäuse 3 umschlossenen Innenraum 32 ein Unterdruck erzeugt werden.

Figur 2 zeigt ein Detail einer weiteren Kälteeinheit mit erfindungsgemäßen Druckerhöhungsmitteln für die Maschine 2 nach Figur 1. In Figur 2 sind nur die sich außerhalb der Maschine befindlichen Teile der Kälteeinheit angedeutet. Als Möglichkeit zu einer Druckerhöhung ist bei dieser Ausführungsform in dem unteren Teil des Vakuumgefäßes 23 in einem stets mit flüssigem Kältemittel k gefüllten Bereich der angeschlossenen Leitungsteile 22 bzw. des Wärmerohres 20 eine Heizvorrichtung 34 angebracht. Diese sich in einem kalten, somit im Allgemeinen zumindest teilweise mit flüssigem Kältemittel k gefüllten Puffervolumens PVₖ befindliche Heizvorrichtung wird immer dann, wenn der Flüssigkeitspegel in dem entsprechenden Behälter bzw. den Leitungsteilen 22 unter eine bestimmte Höhe gesunken ist, kurzzeitig aktiviert. Dabei ist das zu dem warmen Puffervolumen PV_{w} führende Ventil 30 geschlossen. Durch diese Aktivierung der Heizvorrichtung wird dann eine geringe Menge des flüssigen Kältemittels k schlagartig verdampft. Die Heizvorrichtung 34 wird hierzu von einer Steuereinheit 35 angesteuert, die mit einem Füllstandssensor 36 in dem kalten Puffervolumen PVₖ verbunden sein kann. Der durch den Heizpuls ausgelöste Druckanstieg drückt dann das verbleibende Kältemittel k in den zentralen Hohlraum 12 des Rotors 5.

Falls bei einer speziellen Ausführungsform nach Figur 2 auf eine Füllstandserkennung im Bereich des kalten Puffervolumens PVₖ bzw. eines entsprechenden Bereichs der Leitungsteile 22 mittels eines solchen Sensors 36 verzichtet werden kann, ist es auch möglich, den Heizpuls periodisch zu erzeugen, um so für jeweils eine kurze Zeitdauer und in regelmäßigen Zeitabständen wiederholt die erwünschte Druckerhöhung zu realisieren.

Selbstverständlich ist es auch möglich, diese an Hand von Figur 2 erläuterte Ausführungsform eines Druckerhöhungsmittels ) mit der in Figur 1 angedeuteten, eine Pumpe 28 umfassenden Ausführungsform zu kombinieren.

## Patentansprüche

1. Maschineneinrichtung
- mit einem um eine Rotationsachse drehbar gelagerten Rotor, der mindestens eine supraleitende Wicklung aufweist, deren Leiter wärmeleitend an einen zentralen, sich in Achsrichtung erstreckenden zylindrischen Hohlraum angekoppelt sind,
- mit einer außerhalb des Rotors befindlichen, ortsfesten Kälteeinheit mit einem Kondensorraum
- und
- mit zwischen dem zentralen Hohlraum des Rotors und dem Kondensorraum der Kälteeinheit verlaufenden, rohrförmigen Leitungsteilen,
wobei der Hohlraum, die rohrförmigen Leitungsteile und der Kondensorraum ein geschlossenes Ein-Rohr-Leitungssystem bilden, in dem sich ein Kältemittel befindet, wobei unter Ausnutzung eines Thermosyphon-Effektes in dem Kondensorraum kondensiertes Kältemittel über die rohrförmigen Leitungsteile in den zentralen Hohlraum sowie dort verdampfendes Kältemittel zurück über die Leitungsteile zu dem Kondensorraum gelangt, **dadurch gekennzeichnet, dass** Mittel zur Druckerhöhung vorgesehen sind, die eine kurzzeitige Pumpwirkung auf das flüssige Kältemittel (k) in Richtung auf den zentralen Rotorhohlraum (12) hin mittels Druckpulsen an gasförmigem Kältemittel (k') hervorrufen.

2. Einrichtung nach Anspruch 1, **dadurch ge- kennzeichnet, dass** die Druckerhöhungsmittel auf den Bereich des Kondensorraums (18) oder der rohrförmigen Leitungsteile (22) einwirken.

3. Einrichtung nach Anspruch 2, **dadurch ge- kennzeichnet, dass** für das kurzzeitige Pumpen während einer entsprechenden Zeitdauer ein mit gasförmigem, unter Überdruck stehendem Kältemittel (k') gefülltes Puffervolumen (PV_{w}) mit dem Kondensorraum (18) oder den sich daran anschließenden Leitungsteilen (22) über eine das gasförmige Kältemittel (k') fördernde Pumpe (28) zu verbinden ist.

4. Einrichtung nach Anspruch 1 oder 2, **dadurch gekennzeichnet, dass** an den rohrförmigen Leitungsteilen (22) eine auf das flüssige Kältemittel (k) einwirkende Heizvorrichtung (34) angebracht ist, die für das kurzzeitige Pumpen während einer entsprechenden Zeitdauer zu aktivieren ist.

5. Einrichtung nach Anspruch 4, **dadurch ge- kennzeichnet, dass** die Heizvorrichtung (34) in einem zumindest teilweise mit flüssigem Kältemittel (k) gefüllten Puffervolumen (PVₖ) angeordnet ist.

6. Einrichtung nach einem der vorangehenden Ansprüche, **gekennzeichnet durch** eine permanent pulsierende Druckerhöhung.

7. Einrichtung nach einem der vorangehenden Ansprüche, **gekennzeichnet durch** eine sensorisch ausgelöste Druckerhöhung.

8. Einrichtung nach Anspruch 7, **dadurch ge- kennzeichnet, dass** ein die Druckerhöhung auslösender, eine Neigung (δ) der Rotationsachse (A) gegenüber der Horizontalen (H) detektierender Lagesensor (26) vorgesehen ist.

9. Einrichtung nach Anspruch 7, **dadurch ge- kennzeichnet, dass** ein die Druckerhöhung auslösender Füllstandssensor (36) an den rohrförmigen Leitungsteilen (22) vorgesehen ist.

## Claims

1. Machine device having
- a rotor mounted on bearings such that it can rotate about a rotation axis and having at least one superconducting winding the conductors of which are coupled in a thermally conducting manner to a central, cylindrical cavity extending in the axial direction,
- a stationary refrigeration unit that is located outside the rotor and has a condenser space
and
- tubular ducting parts running between the rotor's central cavity and the refrigeration unit's condenser space,
with the cavity, the tubular ducting parts and the condenser space forming a closed single-pipe ducting system in which is located a refrigerant, with refrigerant condensed in the condenser space reaching into the central cavity via the tubular ducting parts through utilising a thermo-siphon effect and vaporising refrigerant returning thence to the condenser space via said ducting parts, **characterised in that** means for increasing pressure are provided which produce a brief pumping effect on the liquid refrigerant (k) towards the central rotor cavity (12) by means of pressure pulses applied to gaseous refrigerant (k').

2. Device according to claim 1, **characterised in that** the pressure-increasing means act on the area of the condenser space (18) or of the tubular ducting parts (22).

3. Device according to claim 2, **characterised in that** for brief pumping for an appropriate length of time, a buffer volume (PV_{w}) filled with gaseous refrigerant (k') under pressure is to be linked to the condenser space (18) or to the ducting parts (22) following therefrom via a pump (28) conveying said gaseous refrigerant (k').

4. Device according to claim 1 or 2, **characterised in that** a heating device (34) that influences the liquid refrigerant (k) and is to be activated for brief pumping for an appropriate length of time is attached to the tubular ducting parts (22).

5. Device according to claim 4, **characterised in that** the heating device (34) is located in a buffer volume (PVₖ) filled at least partially with liquid refrigerant (k).

6. Device according to one of the preceding claims, **characterised by** a permanently pulsating pressure increase.

7. Device according to one of the preceding claims, **characterised by** a pressure increase triggered by sensor means.

8. Device according to claim 7, **characterised in that** a position sensor (26) triggering the pressure increase and detecting the inclination (δ) of the rotation axis (A) relative to the horizontal (H) is provided.

9. Device according to claim 7, **characterised in that** a fill-level sensor (36) triggering the pressure increase is provided attached to the tubular ducting parts (22).

## Revendications

1. Dispositif à moteur
- comprenant un rotor qui est monté tournant par rapport à un axe de rotation et qui a au moins un enroulement supraconducteur dont les conducteurs sont couplés d'une manière conductrice de la chaleur à une cavité centrale cylindrique s'étendant dans la direction de l'axe,
- comprenant un groupe frigorifique à poste fixe se trouvant à l'extérieur du rotor et ayant une chambre de condenseur,
et
- comprenant des tronçons de conduit tubulaires s'étendant entre la cavité centrale du rotor et la chambre de condenseur du groupe frigorifique,
la cavité, les tronçons de conduit tubulaires et la chambre de condenseur formant un système de conduit fermé monotubulaire, dans lequel se trouve un fluide frigorigène, dans lequel, en utilisant un effet de thermosiphon, du fluide frigorigène condensé dans la chambre de condenseur parvient en passant par les tronçons tubulaires de conduit dans la cavité centrale, tandis que du fluide frigorigène qui y est évaporé retourne par les tronçons de conduit à la chambre de condenseur,
**caractérisé en ce qu'**il est prévu des moyens d'augmentation de la pression qui provoquent, au moyen d'impulsions de pression sur le fluide (k') frigorifique sous forme gazeuse, un effet de pompage de courte durée sur le fluide (k) frigorifique liquide en direction de la cavité (12) centrale du rotor.

2. Dispositif suivant la revendication 1, **caractérisé en ce que** les moyens d'augmentation de la pression agissent sur la zone de la chambre (18) de condenseur ou des tronçons (22) de conduit tubulaires.

3. Dispositif suivant la revendication 2, **caractérisé en ce que** pour le pompage de courte durée, on peut, pendant un laps de temps correspondant, mettre un volume (PV_{w}) tampon, empli de fluide (k') frigorigène gazeux et en surpression, en communication avec la chambre (18) de condenseur ou avec les tronçons (22) de conduit qui s'y raccordent par une pompe (28) véhiculant le fluide (k') frigorigène gazeux.

4. Dispositif suivant la revendication 1 ou 2, **caractérisé en ce qu'**il est monté sur les tronçons (22) de conduit tubulaires un dispositif (34) de chauffage qui agit sur le fluide (k) frigorigène liquide et qui est activé pour le pompage de courte durée pendant un laps de temps correspondant.

5. Dispositif suivant la revendication 4, **caractérisé en ce que** le dispositif (34) de chauffage est disposé dans un volume (PVₖ) tampon empli au moins en partie d'un fluide (k) frigorigène liquide.

6. Dispositif suivant l'une des revendications précédentes, **caractérisé par** une augmentation de pression pulsée permanente.

7. Dispositif suivant l'une des revendications précédentes, **caractérisé par** une augmentation de pression déclenchée par capteur.

8. Dispositif suivant la revendication 7, **caractérisé en ce qu'**il est prévu un capteur (26) de position déclenchant l'augmentation de pression et détectant une inclinaison (δ) de l'axe (A) de rotation par rapport à l'horizontale (H).

9. Dispositif suivant la revendication 7, **caractérisé en ce qu'**il est prévu sur les tronçons (22) de conduit tubulaires un capteur (36) de niveau déclenchant l'augmentation de pression.
